Europäisches Patentamt

European Patent Office

Office européen des brevets

(11) Publication number: **0 243 500**
**A1**

## (12) EUROPEAN PATENT APPLICATION
published in accordance with Art. 158(3) EPC

(21) Application number: 86902292.1

(22) Date of filing: 19.03.86

Data of the international application taken as a basis:

(86) International application number:
PCT/BG86/00003

(87) International publication number:
WO86/05559 (25.09.86 86/21)

(51) Int. Cl.³: **F 16 B 5/01**

(30) Priority: 21.03.85 SU 69366

(43) Date of publication of application:
04.11.87 Bulletin 87/45

(84) Designated Contracting States:
AT CH DE FR GB IT LI

(71) Applicant: **INSTITUT PO TECHNITSCHESKA
KIBERNETIKA I ROBOTIKA**
**Akademik Bontschev-Strasse, Block 2**
**Sofia(BG)**

(72) Inventor: **ANGELOV, Georgi Nikolaev**
**ul. L. Karavelov, 32**
**Sofia, 1000(BG)**

(72) Inventor: **IVANOV, Bogdan Tsvetkov**
**ul. Arh. Milanov, 30**
**Sofia, 1126(BG)**

(72) Inventor: **BINBASHIEV, Ivan Yosifov**
**ul. Hr. Smirnenski, 53**
**Sofia, 1126(BG)**

(72) Inventor: **POPSAVOVA, Mariela Petrova**
**ul. Parchevich, 52**
**Sofia, 1000(BG)**

(74) Representative: **Finck, Dieter et al,**
**Patentanwälte v. Füner, Ebbinghaus, Finck Mariahilfplatz
2 & 3**
**D-8000 München 90(DE)**

(54) **JOINT FOR ASSEMBLING OF SIEVE ELEMENTS.**

(57) A joint for assembling of sieve elements (1) consisting of a fixative sleeve (2), a through pin (3) and a connecting support (4) with mounting apertures (20). The fixative sleeve (2) is provided at one of its ends with a fixative widening (7) and at the other end with a supporting widening (66), whereas longitudinal slots (11) are provided in the supporting widening (6) and along a part of the length of a cylindrical casing (5). At least one longitudinal groove (9) is provided on the fixative widening (7) and on a part of the length of the cylindrical casing (5), that groove extending up to the longitudinal slot (11) limited by a bottom (10). The through pin having a calindrical external surface passes through an axial opening (8) of the fixative sleeve (2) and the mounting aperture (20) of the support (4) provided in its carrying part (19). The carrying part (19) is provided with a single leg (21) and with a double leg (22) which are connected with the carrying part (19) through shock absorbing curved elements (25) and which end, respectively, in a middle fitting (24) and in terminal fittings (23).

./...

# JOINT FOR ASSEMBLING OF SIEVE ELEMENTS

## PRIOR ART

The invention refers to a joint for assembling of sieve elements and more particulary for assembling of sieve elements with a gridiron of shakers, and finds application in the ore manufacturing industry, in the building and metalurgy.

A known mash screen whose sieve elements are fitted to by means of the type described above in registered Bulgarian Pat.N     . This joint assembling sieve elements consists of a fixing collar, a securing pin and a joining support. There is a fixing widening at the one side of the fixing collar and a support widening at the other one, and a part of the cylindric body of the fixing collar is long slotted. The wall of the axial plug-hole of the fixing collar and the external surface of the securing pin are wave-like, formed of annular hollows and projections in close succession.

The known realisation is associated with the disadvantage that it fits together sieve elements and gridiron in one piece, whereupon much time and efforts are needed for detaching them, because of the hard pulling out of the fixing collar from the securing apertures of the joining supports. Another disadvantage is the deforming and breaking out of the sieve element at dismounting.

## THE INVENTION

With a joint for assembling of sieve elements, consisting of a fixing collar, securing pin and a joining support, as a point of departure, the invention has the object of designing a joint for assembling of sieve elements, ensuring a quick and easy detachment of the sieve elements from the gridiron of the shaker, whereupon the sieve elements do not damage.

The objective, according to the invention, is attained by means of a joint assembling sieve elements, consisting of a fixing collar, securing pin and joining support with securing apertures. The fixing collar is with a fixing widening at the one side and with a support widening at the other one. The support widening and part of the cylindric body of the fixing collar is long-slotted. According to the invention, on the fixing widening and on a part of the cylindric body length is cut at least one long groove reaching to a bottomed long slot. The securing pin is with outside cylindric surface and can pass through an axial plug-hole of the fixing collar and through a securing aperture of the joining support, placed in its propping sector. There are single and twin supports fitted to the propping sector by means of damping roundings. There are middle and collateral fittings at the lower end of the single and the twin supports respectively.

According to a variation of the invention, the bottom of the longitudinal groove is placed between the inside part of the longitudinal groove and the axial plug-hole of the fixing collar. There are made longitudinal cogs on the outer surface of the fixing widening.

According to another variation of the invention, the bottom of the longitudinal groove reaches up to the outer surface of the cylindric body and the fixing widening has a solid ring. There is a first cylindric hollow between the same and the outer surface of the fixing widening. There are long protrusions with cutting edges at the one side of the securing pin, following the assembling, whose number corresponds to the number of the longitudinal grooves of the fixing collar.

The particular advantages of the joint for assembling of sieve elements per invention are as follows:possibility of detachment of the sieve elements from the gridiron of the shaker; at dismounting the sieve elements do not deform nor break out, which enables a repeated use and regeneration. In the first variation the sieve elements may be mounted on the gridiron of its both sides, the fixing collar and the securing pin may be placed either from above downwards or from down upwards.

BRIEF DESCRIPTION OF THE FIGURES ATTACHED HEREBY:

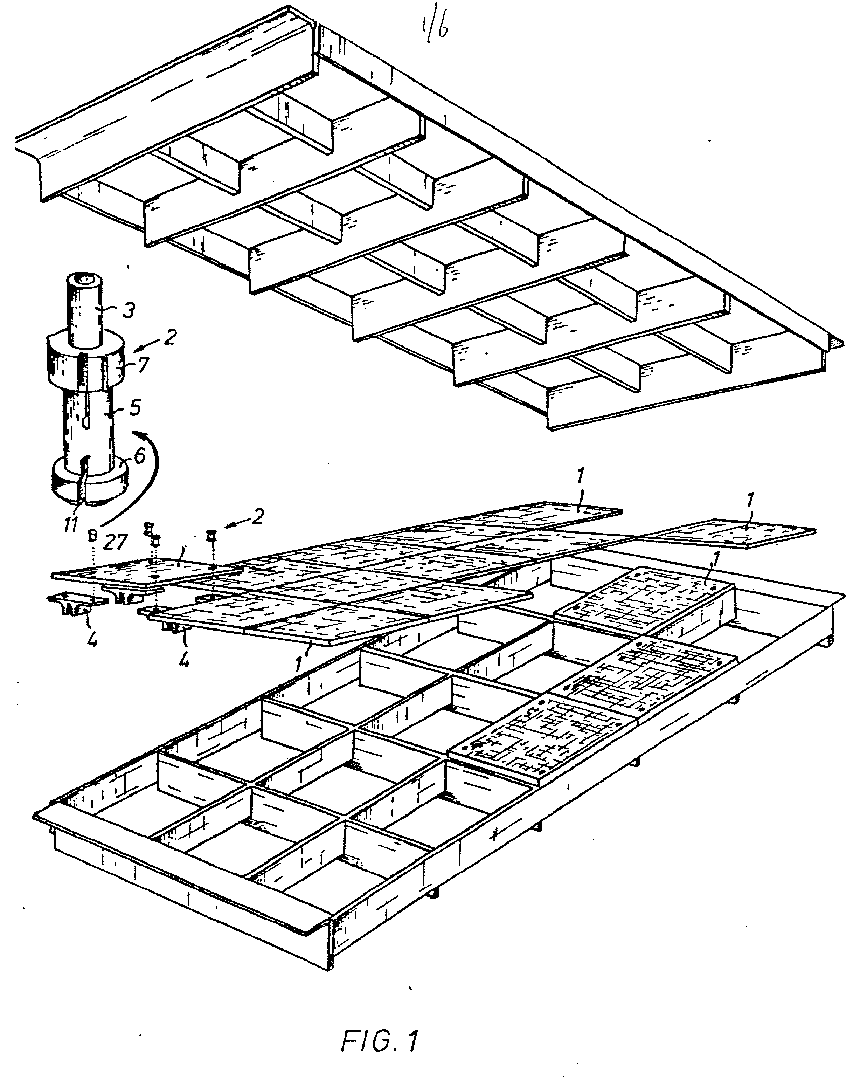

Figure 1 is a perspective view of a sieve with sieve elements, partially detached from the gridiron and an enlarged fixing collar and securing pin.

Figure 2 is an axonometric figure of axial section of a fixing collar with outside longitudinal grooves.

Figure 3 is an axonometric figure of axial section of a fixing collar with inside longitudinal grooves and securing pin.

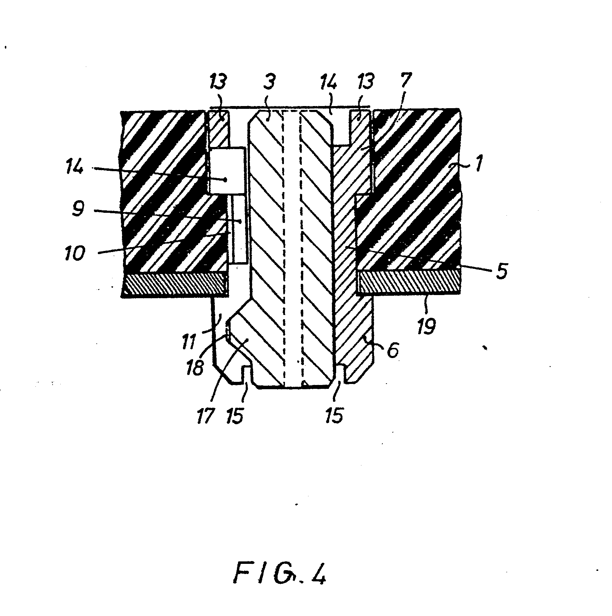

Figure 4 is a scheme of a joint mounted on a sieve element.

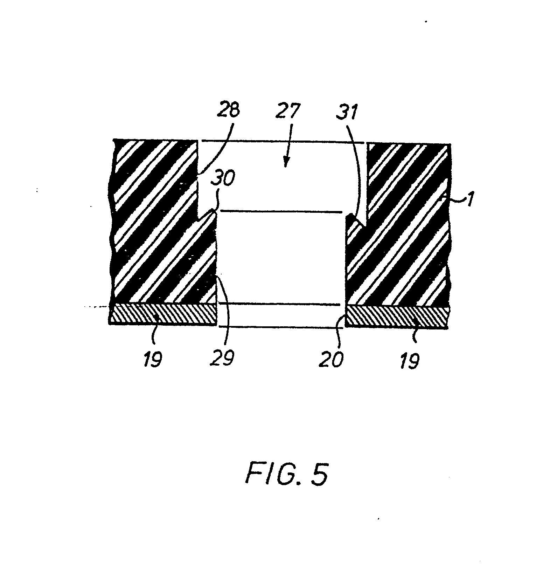

Figure 5 is a side view of a cylindrically profiled aperture of a sieve element and securing apertures of a joining support.

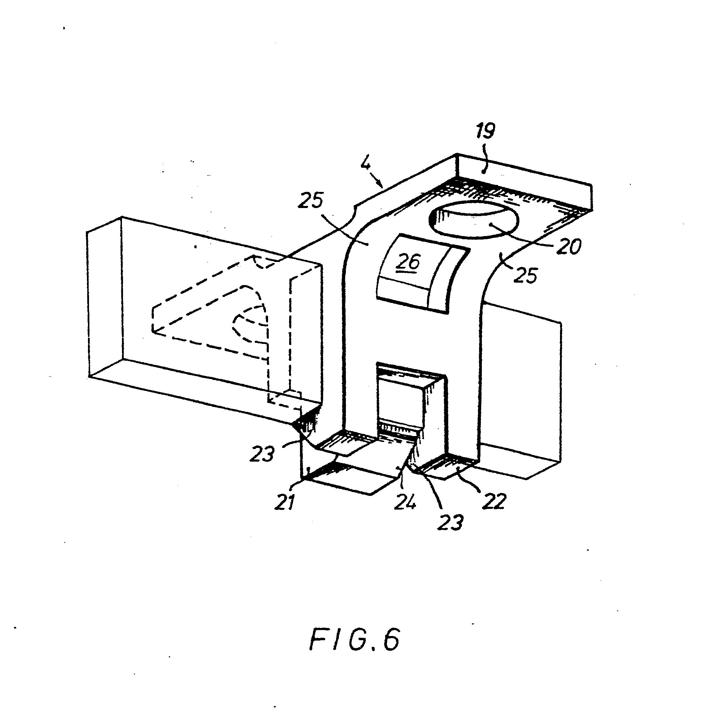

Figure 6 is an axonometric figure of a joining support on a gridiron.

The invention will be explained in further details with the aid of explanatory embodiments as shown in the drawings.

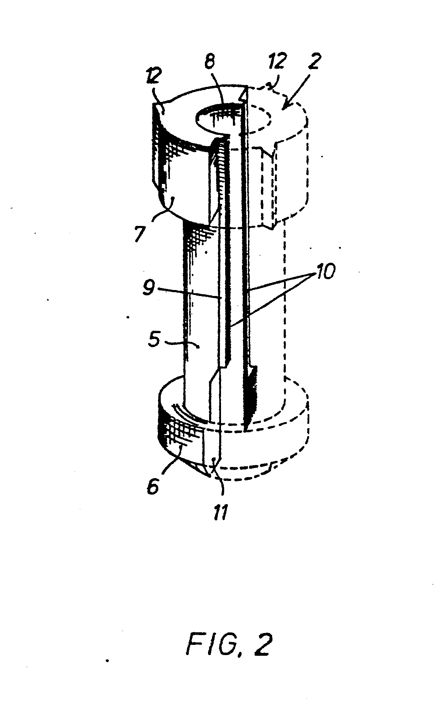

The joint for assembling sieve elements (1) with the gridiron of a shaker consists of a fixing collar(2), securing pin (3) and joining support (4). The fixing collar (2) consists of a cylindric body (5) with a supporting widening (6) at the one side and a fixing widening (7) at the other one and an axial plug-hole (8). The diameter of the fixing widening (7) is equal to the support widening (6) and is greater than the diameter of the cylindric body (5). There is one long groove at least (9) cut on the outer surface of the fixing collar (2), as per Figure 2, on the fixing widening (7) and on a part length of the cylindric body (5). This groove does not reach down to the axial plug-hole (8). Between the inside part of the long groove (9) and the axial plug-hole (8) is shaped the bottom (10). Through the support widening (6) and through a part of the cylindric body(5) is cut at least one long slotted hole (11), its width being equal at least to the width of the longitudinal groove (9). The beginning of the long-slotted cut (11) coincides with the end of the longitudinal groove (9), and its end reaches to the outer surface of the support widening (6). The total width of the longitudinal cuts (11) exceeds $\pi$ times the difference in the diameters between the support widening (6) and the cylindric body (5). On the outer surface of the fixing widening (7) are shaped longitudinal cogs (12). The securing pin (3) is with a cylindric surface, the outer diameter being bigger than the diameter of the axial plug-hole (8) of the fixing collar (2).

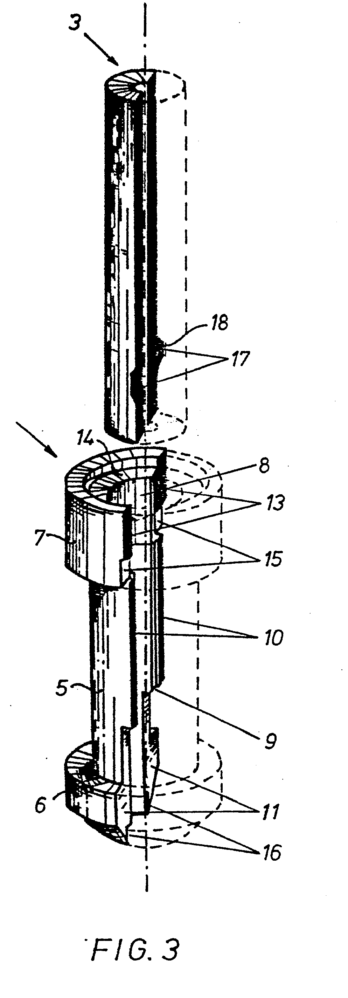

According to a variation shown on Figure 3, the longitudinal grooves (9) of the fixing collar (2) are cut, on the surface of the axial plug-hole (8), their bottoms (10) reaching to the outer surface of the cylindric body (5). The fixing widening (7) is with a solid ring (13). Between same and the outer part of the fixing widening (7) there is first cylindric hollow (14). Between the solid ring (13) and the outer part of the fixing widening (7) there are radial holes (15) reaching to the beginning of the long grooves (9) of the cylindric body (5). At the end of the support widening (6) there is a second cylindric hollow (16).

The securing pin (3) in this variation of the fixing collar (2) is at one side, following the mounting, with long protrusions (17) with cutting edges (18), whose number corresponds to the number of the long grooves (9) of the fixing collar (2).

The joining support (4) consists of propping sector (19) with securing apertures (20) at both sides. In the middle of the propping sector (19) unilaterally and vertically to it are placed separately one from another the single support (21) and the twin support (22). The twin support (22) ends with two collateral fittings (23), but the single support (21) -with a middle fitting (24) which,when mounted, is placed between both end fittings (23) of the double support (22). The collateral fittings (23) and the middle fitting (24) end with a thumb oriented inwards, one facing the other. The single support (21) and the twin support (22) are fitted to the propping sector (19) by means of damping roundings (25) and at these places are made technological holes (26).

For assembling sieve element (1) with the gridiron every sieve element (1) is with cylindrically profiled holes (27) each of them two-staged with upper cylindric surface (28) and lower cylindric profile (29). Between the upper (28) and the lower cylindric surfaces (29) is formed a threshold (30) with a pressing inclined surface (31).

The assembling of the sieve element with the gridiron with the help of the joint, as per invention, is executed in the following way:
The sieve element (1) is placed on the gridiron so that to rest on the joining supports (4). The joining supports (4) are mounted on their places fixed on the gridiron. Their right positioning is found when the cylindrically profiled holes (27) fall in fully with the securing apertures (20) of the joining supports (4). The fixing collars (2) are put in each cylindrically profiled hole (27) of the sieve element (1), so that the support widening (6) of each fixing collar (2) passes consecutively through the lower cylindric profile (29) of the sieve element (1) and the securing apertures (20) of the joining support (4) with fold support widening (6) in the longitudinal slotted cut (11) of the support widening (6) through the securing apertures (20), the support widening (6) stretches and covers from the outer side through the securing apertures (20) the propping sector (19) of the joining supports (4), the longitudinal cogs (12) cut into the outer side (28) of the cylindrically profiled hole (27). The inner side of the fixing widening (7) presses the threshold (30) to the cylindrically profiled hole (27) increasing in this way the reliability of the joint and making tight connection between the sieve element (1) and the joining support (4). The securing pin (3) is driven into the axial plug-hole (8) of the fixing collar (2), as per Figure 2, from the side of the fixing widening (7) to the support widening (6) when mounting is executed from the upper side of the sieve elements (1) or from below from the support widening (6) to the fixing widening (7), when the mounting is executed from the downside of the sieve element (1). Because of the bigger diameter of the securing pin (3) compared with the diameter of the axial plug-hole (8), by driving in of the securing pin (3), the bottoms (10) of the long grooves break out and the fixing collar (2) is split into parts as many as the long grooves (9) are. The longitudinal cogs (12) do not permit to the fixing collar (2) to turn around its axis, if at driving in of the securing pin (3) only one from the bottoms (10) of the long grooves (9) is broken out.

The assembling of the sieve elements (1) may be done completely as well when proceeding from below of the gridiron. The sieve elements (1) are put on the propping sector (19) of the joining support (4) in the known way by meeting of their apertures. The fixing collar (2) are put at first by passing of each one through the securing apertures (20), the support widening (6) narrows in the long slotted cut (11) and passes consecutively through the securing apertures (20) and through the lower cylindric profile (29) of the cylindrically profiled hole (27). Then the support widening stretches and takes the space formed by the upper cylindric surface (28), and the fixing widening (7) touches from below the propping sector (19) in the range of the securing apertures (20).The securing pin (3) is driven into the axial hole from down upwards, whereupon it serves its known functions. The support widening (6) presses tight the upper cylindric part (28) of the cylindrically profiled hole (27), with exception of the places where the long slotted cuts (11) are made, hence the fixing collar (2) can not turn around its axis if at driving in of the securing pin (3) only one of the bottoms (10) breaks out. In this way it is effected a solid and reliable connection between the sieve elements (1) and the joining supports (4) which from their part are connected with the gridiron of the shaker.

The dismounting of the sieve element (1) from the gridiron is effected by pulling out of the securing pin (3) from one of both sides, the easier for dismounting, and the fixing collar (2) which is split at the mounting from the driving in of the securing pin (2), is divided into parts equal in number to the long grooves (9), by which it liberates the cylindrically profiled hole (27) of the sieve element (1) and the securing aperture (20) of the joining support (4) which remains connected with the gridiron of the shaker. The joint element releases the worn-out sieve elements (1) from the gridiron without efforts and deformations.

- 9 -

AUTHOR'S CLAIM

1. The joint for assembling sieve elements comprises a fixing collar, a securing pin and a joining support with securing apertures. The fixing collar is at one side with a fixing widening and at the other one - with a support widening. Long slotted cuts pass through the support widening and part of the cylindric body. One long groove at least passes through the fixing widening (7) and through part of the length of the cylindric body (5), reaching to a long slotted cut (11) limited by a bottom (10). The securing pin (3) is with an outer cylindric surface and passes through the axial hole (8) of the fixing collar (2) and through the securing aperture (20) of the joining support (4), bored in its propping sector (19) with the single (21) and the twin (22) supports, fitted together with the propping sector (19) by means of damping roundings (25) and ending at their lower ends with a middle fitting (24) and end fittings (23) accordingly.

2. The joint for assembling sieve elements, as per claim 1, is distinguished by a bottom (10) of the long groove (9) placed between the inner part of the long groove (9) and the axial plug-hole (8) of the fixing collar (2), and the outer surface of the fixing widening (7) is with cut longitudinal cogs (12).

3. The joint for assembling sieve elements, as per claim 1, is distinguished with the bottom (10) of the long grooves (9) reaching to the outer surface of the cylindric body (5). The fixing widening (7) is with solid ring (13) and between the latter and the

- 10 -

outer surface of the fixing widening (7) is the first cylindric hollow(14). The securing pin (3) has longitudinal protrusions (17) with cutting edges (18) at one side, following the assembling, whose number corresponds to the number of the long grooves (9) of the fixing collar (2).

Literature: Author's certificate for Bulgarian invention reg. N 57214

0243500

1/6

FIG. 1

FIG. 2

0243500

FIG. 3

4/6

FIG.4

5/6

FIG. 5

FIG.6

0243500

# INTERNATIONAL SEARCH REPORT

International Application No  PCT/BG 86/00003

**I. CLASSIFICATION OF SUBJECT MATTER** (if several classification symbols apply, indicate all) *

According to International Patent Classification (IPC) or to both National Classification and IPC

IPC$^4$:  F 16 B 5/01

**II. FIELDS SEARCHED**

| Minimum Documentation Searched 7 | |
|---|---|
| Classification System | Classification Symbols |
| IPC$^4$: | F16B 5/01,5/06,2/20,2/24,12/10,12/24,12/26,12/32, 12/36,13/00,13/02 |

Documentation Searched other than Minimum Documentation
to the Extent that such Documents are Included in the Fields Searched *

**III. DOCUMENTS CONSIDERED TO BE RELEVANT** *

| Category * | Citation of Document, 11 with indication, where appropriate, of the relevant passages 12 | Relevant to Claim No. 13 |
|---|---|---|
| A | FR, A1, 2018499,(AMP INCORPORATED), 29 May 1970, see figures 1,9,10, page 1, lines 1-10, page 6, lines 23-33 | 1 |
| A,P | FR, A1, 2554522, (REGIE NATIONALE DES USINES RENAULT), 10 May 1985, see figures 1,2,4 | 1 |
| A | SU, A1, 500384, (Stankostroitelny zavod im. Iliicha), 22 April 1976, see figure 1 | 1 |

-.-.-.-

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 17 June 1986  (17.06.86) | 9 July 1986  (09.07.86) |
| International Searching Authority | Signature of Authorized Officer |
| ISA/SU | |

Form PCT/ISA/210 (second sheet) (January 1965)